# EUROPÄISCHE PATENTANMELDUNG

(11) **EP 4 016 223 A1**
(43) Veröffentlichungstag der Anmeldung: **22.06.2022**
(21) Anmeldenummer: 21214384.6
(22) Anmeldetag: 14.12.2021
(51) Int. Cl.: G05B 23/02

(54) **VERFAHREN ZUR AUTOMATISIERTEN UNTERSTÜTZUNG EINER INSPEKTION UND/ODER ZUSTANDSÜBERWACHUNG VON OBJEKTEN**

(30) Priorität: 21.12.2020 DE 102020216401
(71) Anmelder: Siemens Aktiengesellschaft, 80333 München (DE)
(72) Erfinder: Platz, Axel, 81479 München (DE)

(57) **Zusammenfassung**

Verfahren, bei dem ein Prozessor (P) auf eine Datenbank zugreift, welche eine Menge von Datensätzen enthält, in welcher ein Fokusdatensatz enthalten ist, wobei jeder Datensatz aus der Menge von Datensätzen für jeweils ein Objekt aus einer Menge von Objekten Sensordaten und eine erste, zweite und dritte Kontextinformation enthält, welche jeweils das Objekt selbst oder eine Situation des Objekts zum Zeitpunkt der Messungen an dem Objekt charakterisieren, der Prozessor (P) oder ein weiterer Prozessor erste Datensätze aus der Menge von Datensätzen auswählt, deren erste Kontextinformation mit der ersten Kontextinformation des Fokusdatensatzes nicht übereinstimmt, und deren zweite Kontextinformation mit der zweiten Kontextinformation des Fokusdatensatzes übereinstimmt, der Prozessor (P) oder ein weiterer Prozessor eine Fokusgrafik (333), welche die Sensordaten des Fokusdatensatzes darstellt, und erste Grafiken (133, 233, 433, 533), welche jeweils die Sensordaten jeweils eines der ersten Datensätze darstellen, auf einer ersten Achse (A1) auf einer grafischen Benutzeroberfläche (GO) aufreiht, der Prozessor (P) oder ein weiterer Prozessor zweite Datensätze aus der Menge von Datensätzen auswählt, deren erste Kontextinformation mit der ersten Kontextinformation des Fokusdatensatzes übereinstimmt, und deren zweite Kontextinformation mit der zweiten Kontextinformation des Fokusdatensatzes nicht übereinstimmt, der Prozessor (P) oder ein weiterer Prozessor zweite Grafiken (313, 323), welche jeweils die Sensordaten jeweils eines der zweiten Datensätze darstellen, auf einer zweiten Achse (A2) auf der grafischen Benutzeroberfläche (GO) aufreiht, welche die erste Achse (A1) an der Position der Fokusgrafik (333) schneidet.

## Beschreibung

Bei der Automobilfertigung werden Karosserien in vollautomatischen Förderanlagen transportiert. Nach dem Karosseriebau durchlaufen sie hierbei eine Lackieranlage, bevor sie der Endmontagelinie zugeführt werden.

Die vollautomatischen Förderanlagen, beispielsweise in einer Montagelinie, nutzen Montageträger, an welchen die Karosserie als Montageobjekt fixiert wird. Die Montageträger werden im Folgenden allgemein als Halterungen und die Montageobjekte allgemein als Werkstücke bezeichnet.

Die Erfindung betrifft neben der Automobilfertigung und Montagevorgängen im engeren Sinne allgemein Produktionssysteme, Werkstätten und technische Anlagen, in welchen Objekte einer Inspektion und/oder Zustandsüberwachung zur Feststellung und Beurteilung ihres Istzustands unterzogen werden. Bei den Objekten kann es sich folglich um beliebige Bauelemente, Teile, Geräte, Maschinen, Betriebsmittel, Produktionsmittel, Teilsysteme, Systeme oder Funktionseinheiten handeln, welche beispielsweise im Hinblick auf Temperatur, Vibration oder Lageabweichungen zu untersuchen sind.

Die Position und Orientierung eines Objekts wird im Folgenden unter dem Begriff "Pose" zusammengefasst. DIN EN ISO 8373 definiert den Begriff "Pose" als Kombination von Position und Orientierung eines Objekts im dreidimensionalen Raum, welcher als Basiskoordinatensystem vorgegeben ist. Die Position des Objekts kann beispielsweise in drei Koordinaten als Abstand seines Massepunkts vom Ursprung des Basiskoordinatensystems angegeben werden. Die Orientierung des Objekts kann beispielsweise beschrieben werden, indem an seinem Massepunkt ein weiteres Koordinatensystem aufgespannt wird, für dessen Koordinatenachsen durch drei Winkelangaben jeweils ein Winkelversatz zu den jeweiligen Achsen des Basiskoordinatensystems angegeben wird. Unterschiedliche Posen können mittels Translation und Rotation aufeinander abgebildet werden.

Nach DIN EN 13306 und DIN 31051 bezeichnet Instandhaltung eine Kombination von Maßnahmen, welche dem Erhalt oder der Wiederherstellung eines funktionsfähigen Zustands eines Objekts dienen. Eine dieser Maßnahmen ist die Inspektion, welche zur Feststellung und Beurteilung des Istzustands des Objekts sowie zur Bestimmung möglicher Ursachen von Beeinträchtigungen dient. Das Ergebnis der Inspektion kann darin bestehen, Instandsetzungsmaßnahmen für das Objekt zu identifizieren, welche im Anschluss durchgeführt werden. Der Begriff "Objekt" bezeichnet hierbei beispielsweise ein Bauelement, Teil, Gerät oder Teilsystem, eine Funktionseinheit, ein Betriebsmittel oder ein System, welches für sich allein betrachtet werden kann.

Im Rahmen einer Zustandsüberwachung (im Englischen als Condition Monitoring bezeichnet) werden regelmäßig oder permanent Maschinenzustände durch Messung und Analyse physikalischer Größen erfasst. Hierzu werden Sensordaten verarbeitet, welche insbesondere in Echtzeit analysiert werden. Die Überwachung des Maschinenzustands ermöglicht eine zustandsorientierte Instandhaltung.

Sowohl Funktionsausfälle von Objekten wie Halterungen in Produktionssystemen und deren Instandsetzung als auch vorbeugende Inspektions- und Wartungsarbeiten sind in der Fertigung mit hohen Kosten verbunden, da sie zu einem Stillstand des jeweiligen Fertigungsabschnitts führen können.

Die Aufgabe der Erfindung besteht darin, eine Inspektion und/oder Zustandsüberwachung von Objekten automatisiert zu unterstützen.

Die Aufgabe der Erfindung wird durch die unabhängigen Patentansprüche gelöst. Weitere vorteilhafte Ausführungsformen der Erfindung sind durch die Merkmale der Unteransprüche gekennzeichnet.

Die in den Unteransprüchen 7 bis 20 beschriebenen Ausführungsformen können für die Fokusgrafik, die ersten Grafiken, die zweiten Grafiken und die dritten Grafiken auf drei Achsen oder lediglich für die Fokusgrafik, die ersten Grafiken und die zweiten Grafiken auf zwei Achsen implementiert werden.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Es wird ein nutzerzentrierter Ansatz zur automatisierten Unterstützung einer Inspektion oder Zustandsüberwachung geschaffen, welcher eine Visualisierung von Sensordaten durch ein besonderes Visualisierungskonzept bereitstellt, welches mit einer mehrdimensionalen Darstellung einen neuartigen Überblick und einen visuellen Vergleich von Daten ermöglicht, welche bisher nur als Zahlenkolonnen oder isolierte Videobilder ohne geeigneten Kontext verfügbar waren. Durch diesen Überblick lassen sich Muster erkennen, welche detektivisch nachverfolgt, nach Kriterien gefiltert und schließlich auf mögliche Ursachen zurückgeführt werden können. Dies bedeutet eine signifikante Erleichterung, Effizienzsteigerung und qualitative Verbesserung für den Wartungsingenieur.

Bei der Fehlersuche und -bestimmung ist es oft nur wichtig, ob eine Art der Abweichung von Sensordaten gleich oder anders ist, beispielsweise im Vergleich zwischen verschiedenen Prozessschritten, Objekten, Zeitpunkten oder anderen Aspekten von Situationen, in denen sich die Objekte befinden.

Der nutzerzentrierte Ansatz ermöglicht eine vergleichende Inspektion oder Zustandsüberwachung im Hinblick auf solche unterschiedlichen Kategorien, welche in zwei oder drei Raumachsen aufgeschlüsselt und zum Vergleich dargestellt werden.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: ein Objekt 0, welches mit einem Sekundärobjekt SO in Verbindung steht, in einer Soll-Pose 1 und einer skalierten Pose 2,
- Figur 2: eine Fokusgrafik 333, welche das in Figur 1 gezeigte Objekt O abwechselnd in der Soll-Pose 1 und der skalierten Pose 2 zeigt,
- Figur 3: ein anderes Beispiel einer Fokusgrafik,
- Figur 4: erste Grafiken 133, 233, 433, 533, welche neben der Fokusgrafik 333 auf einer ersten Achse A1 auf einer grafischen Benutzeroberfläche aufgereiht werden,
- Figur 5: zweite Grafiken 313, 323, welche auf einer zweiten Achse A2 aufgereiht werden, welche die erste Achse A1 an der Position der Fokusgrafik 333 schneidet,
- Figur 6: dritte Grafiken 331, 332, welche auf einer dritten Achse A3, welche die erste Achse A1 und die zweite Achse A2 an der Position der Fokusgrafik 333 schneidet, aufgereiht werden, und
- Figur 7: ein Endgerät EG mit einem Prozessor P, einem Eingabemittel EM und einer Anzeige AZ, welche zur Ausgabe einer grafischen Benutzeroberfläche GO eingerichtet ist.

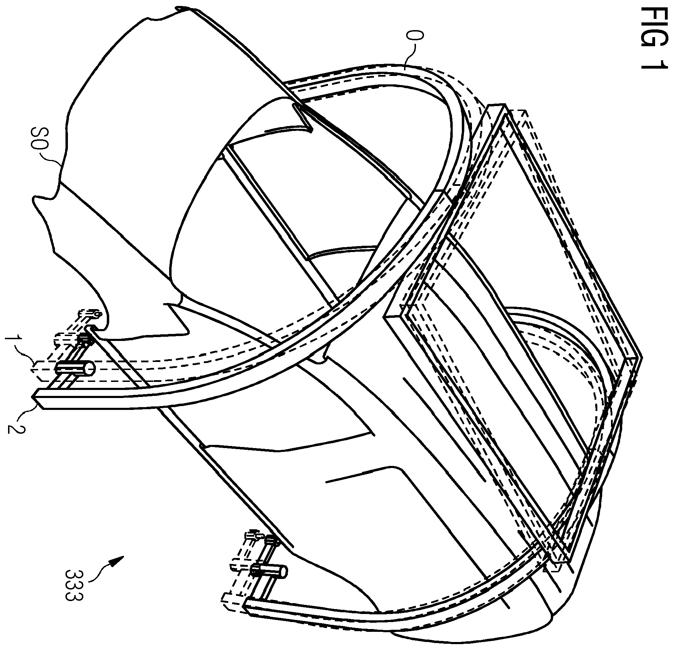

Figur 1 zeigt ein Objekt O, welches mit einem Sekundärobjekt SO in Verbindung steht, in einer Soll-Pose 1 und einer skalierten Pose 2. Das hier gezeigte Objekt O ist eine Halterung mit einem Werkstück als Sekundärobjekt SO. Konkret ist als Objekt O ein Gehänge abgebildet, welches als Sekundärobjekt SO eine Karosserie trägt. Je nach Anwendung kann auch das Werkstück selbst als Objekt O gewählt werden, oder als Objekt O die Gesamtheit aus Halterung und Werkstück betrachtet werden. Weiterhin kann das Objekt O auch gänzlich anderer Art sein, beispielsweise eine Antriebswelle.

Die Soll-Pose 1 ist beispielsweise eine normierte Pose, welche eine Fertigungsstation, der das Objekt O zugeführt wird, für das Objekt O erwartet und voraussetzt. Die Soll-Pose 1 kann dabei beispielsweise durch eine Konstruktion der Fertigungsstation vorgegeben sein oder vorab eingemessen werden.

Ein Ingenieur soll nun darin unterstützt werden, eine Inspektion und/oder Zustandsüberwachung für das Objekt durchzuführen. Vorteilhafterweise zeigt eine Fokusgrafik 333 dem Ingenieur auf der Anzeige Art und Ausmaß einer Translation und/oder Rotation des Objekts O gegenüber der Soll-Pose 1.

Hierzu wird zunächst eine Ist-Pose des Objekts O in der Fertigungsstation, welche dessen Translation und/oder Rotation gegenüber der Soll-Pose 1 angibt, über Sensoren ermittelt. Derartige Sensoren sind in heutigen Fertigungsstationen häufig bereits installiert, da sie eine Feinjustierung von Industrierobotern ermöglichen. So messen Kamera-basierte Systeme in Roboterzellen, welche im Rahmen einer Automobilfertigung als Fertigungsstationen durchlaufen werden, in jeder Roboterzelle vollautomatisch die Position und Orientierung des Objekts O. Selbstverständlich können auch Laserscanner, Ultraschall-, Radar- oder Lidar-Sensoren zum Einsatz kommen. Alle der genannten Sensortypen liefern Messwerte, aus denen die Ist-Pose des Objekts O unmittelbar entnommen oder zumindest berechnet werden kann. Hierzu werden die Messwerte als Rohwerte oder nach einer geeigneten Aufbereitung zunächst als Sensordaten in einem Fokusdatensatz abgespeichert. Eine derartige Datenerfassung in technischen Anlagen wie Werkstätten oder Produktionssystemen läuft in heutigen industriellen Cloudanwendungen kontinuierlich im Hintergrund ab, sodass die entsprechenden Datensätze zur Auswertung lediglich aus der industriellen Cloud abgerufen werden müssen. Vorteilhaft ist hier auch anhand neuer Messungen im laufenden Betrieb eine fortlaufende Aktualisierung des Fokusdatensatzes oder anderer Datensätze möglich, welche ihrerseits die Fokusgrafik aktualisiert. Gegebenenfalls können derartige Aktualisierungen sogar in Echtzeit erfolgen.

Damit Art und Ausmaß der Abweichung der Ist-Pose von der Soll-Pose 1 auf der Anzeige deutlich erkennbar ist, wird nicht die Ist-Pose selbst von der Fokusgrafik 333 visualisiert. Denn die tatsächliche Abweichung kann nur wenige Millimeter betragen oder eine sehr kleine Winkelabweichung sein. Eine derartige Abweichung wäre bei maßstabsgetreuer Darstellung in der Fokusgrafik 333 nicht erkennbar, kann aber diagnostisch im Rahmen der Inspektion und/oder Zustandsüberwachung durchaus von Bedeutung sein. Deshalb wird aus der Ist-Pose eine skalierte Pose 2 berechnet, indem der Prozessor die Translation und/oder Rotation gegenüber der Soll-Pose 1 skaliert, beispielsweise um einen Faktor zwischen 10 und 200, der je nach Anwendungsfall gewählt wird. Die Fokusgrafik zeigt nun abwechselnd eine grafische Abbildung des Objekts O in der Soll-Pose 1 und eine grafische Abbildung des Objekts O in der skalierten Pose 2.

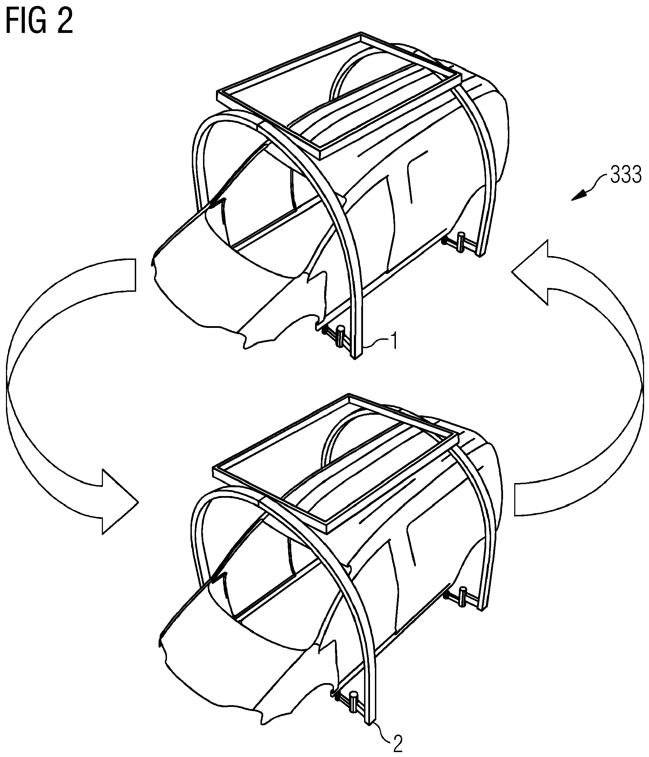

Figur 2 zeigt die entsprechende Animation der Fokusgrafik 333 in einer schematischen Darstellung.

Das in Figur 1 gezeigte Objekt O wird abwechselnd in der Soll-Pose 1 und der skalierten Pose 2 zeigt. Die beiden Abbildungen werden wie in Figur 1 gezeichnet überblendet oder alternierend angezeigt, sodass Art und Ausmaß der Translation und Rotation unmittelbar ersichtlich werden. Vorzugsweise bewegt sich das Objekt O in einer Animation kontinuierlich zwischen der Soll-Pose 1 und der skalierten Pose 2 hin- und her, wobei die Bewegung von einer Pose in die andere zwischen 0,4 und 1,7 Sekunden, insbesondere zwischen 0,8 und 0,9 Sekunden dauert. Das Sekundärobjekt SO, in Figur 1 als Karosserie gezeigt, kann hierbei mitbewegt werden.

Besonders vorteilhaft ist es, wenn die Animation das Objekt O während der Bewegung in die skalierte Pose 2 in Abhängigkeit von dem Ausmaß der Translation und/oder Rotation zunehmend einfärbt. So kann das Objekt O - oder auch zusätzlich das Sekundärobjekt SO - bei einer Drehung oder Translation einseitig rot eingefärbt werden, als ob es einer roten Lichtquelle in Analogie eines Feuers gefährlich nah kommen würde. Die gegenüberliegende Seite kann dabei blau gefärbt werden. Dieser Effekt kann auch seinerseits skaliert, also übertrieben werden. Eine starke Abweichung der Ist-Pose von der Soll-Pose 1 wird somit bereits anhand der Änderung der Farbe und Farbintensität der Fokusgrafik 333 unmittelbar erkennbar, wodurch der Vergleich mit anderen Fällen stark vereinfacht wird.

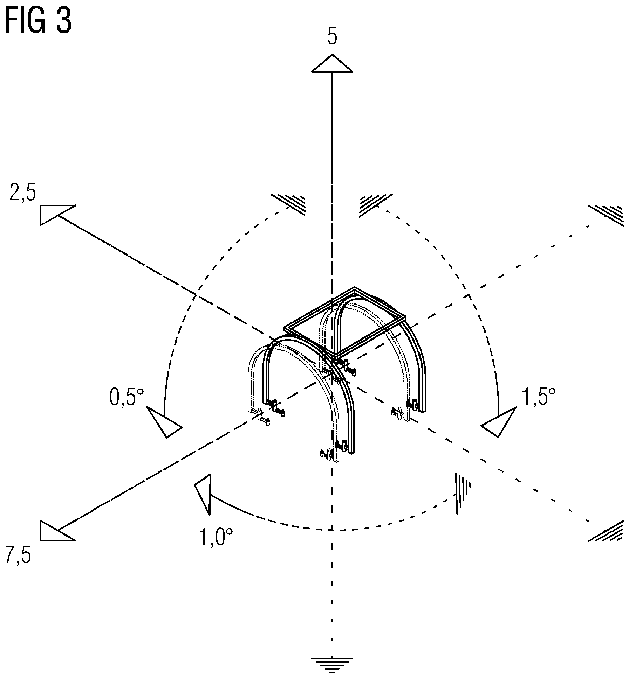

Figur 3 zeigt ein anderes Beispiel einer Fokusgrafik. Diese enthält eine Anzeige von Abweichungen und entsprechender Werte bezogen auf die drei Raumachsen, jeweils hinsichtlich Translation und Rotation. Die Grafiken in den vorliegenden Ausführungsbeispielen können durch Pfeile und Ziffern wie in Figur 3 gezeigt angereichert werden.

In einer Verallgemeinerung der bisherigen Ausführungsbeispiele zeigt die Fokusgrafik lediglich eine Abweichung der Sensordaten des jeweiligen Datensatzes, hier des Fokusdatensatzes, von einem Soll-Zustand. Der Grad der Abweichung kann insbesondere durch eine Einfärbung visualisiert werden. Bei der Abweichung muss es sich nicht um eine Translation oder Rotation handeln, sondern es könnte sich beispielsweise auch um eine Abweichung von Temperaturen oder Vibrationen von einem Referenzmuster handeln. Demensprechend kann eine Vielzahl möglicher Ausführungsformen der Erfindung auch ganz andere Sensordaten visualisieren, etwa Temperatur oder Vibration.

Weiterhin können die Sensordaten auch als absolute Größen statt als Abweichung von einem Referenzwert visualisiert werden.

So kann der Fokusdatensatz Abgaswerte bei einer Abgasuntersuchung in einer Werkstatt als Sensordaten für ein Kraftfahrzeug als Objekt enthalten, oder eine Temperatur oder Vibrationen als Sensordaten von einem Motor als Objekt, welcher in einer Werkstatt im Rahmen einer Untersuchung unter Volllast betrieben wird.

Vorteilhafterweise bildet die Fokusgrafik das jeweilige Objekt ab, wobei die Abbildung des Objekts durch die Sensordaten beeinflusst oder durch eine Darstellung der Sensordaten überlagert oder angereichert wird.

Beispielsweise zeigt die Fokusgrafik ein Wärmebild des jeweiligen Objekts, welches Temperaturmessungen als Sensordaten darstellt. Entsprechende Sensordaten lassen sich beispielsweise mittels Thermographie, einem bildgebenden Verfahren zur Anzeige der Oberflächentemperatur von Objekten, erfassen.

Alternativ kann die Fokusgrafik ein Vibrationsmuster des jeweiligen Objekts zeigen, welches Vibrationsmessungen als Sensordaten einer Abbildung des Objekts überlagert darstellt. Beispielsweise können an einer Gasturbine als Objekt eine Vielzahl von Vibrationssensoren angeordnet sein, deren Messwerte als Farbkodierung einer abbildhaften Darstellung der Gasturbine überlagert sein können. Auch flächige Darstellungen von Vibrationen auf Oberflächen oder im Inneren von Maschinen lassen sich algorithmisch aus Messungen einzelner Sensoren hochrechnen oder mittels Laser-Scanning-Vibrometrie sensorisch erfassen.

Weiterhin muss die Fokusgrafik nicht bewegt sein, sondern kann auch gänzlich unbewegt sein, wobei die Sensordaten dann etwa durch Pfeile oder Farben visualisiert sein können.

Die jeweiligen Sensordaten können hierbei fortlaufend oder sogar in Echtzeit aktualisiert werden, und die Fokusgrafik kann ebenso in Echtzeit aktualisiert werden.

Alle der bisher erläuterten Berechnungs- und Visualisierungsmöglichkeiten für die Fokusgrafik 333 gelten in gleicher Weise für die anderen Grafiken, welche im Folgenden eingeführt werden. Sämtliche der im Folgenden erläuterten und in den Figuren gezeigten Grafiken müssen also keine Position und Orientierung bzw. deren Abweichung visualisieren, sondern können entsprechend der genannten anderen Ausführungsbeispiele ausgestaltet sein. Ferner können sämtliche Grafiken bewegt oder auch unbewegt sein.

Wesentlich ist hierbei nur, dass gleiches mit gleichem verglichen wird, beispielsweise Wärmebilder mit Wärmebildern oder Vibrationsmuster mit Vibrationsmustern.

Voraussetzung für die folgenden Ausführungsbeispiele ist zunächst eine Datenbank, welche eine Menge von Datensätzen enthält, in welcher auch der zuvor erläuterte Fokusdatensatz enthalten ist, wobei jeder Datensatz aus der Menge von Datensätzen für jeweils ein Objekt aus einer Menge von Objekten Sensordaten enthält, welche Messwerte von Messungen von Sensoren an dem jeweiligen Objekt und/oder daraus abgeleitete Daten enthalten, und eine erste Kontextinformation, eine zweite Kontextinformation und eine dritte Kontextinformation enthält, welche das jeweilige Objekt selbst oder eine Situation des jeweiligen Objekts zum Zeitpunkt der Messungen an dem jeweiligen Objekt charakterisieren.

Selbstverständlich können die Datensätze auch noch weitere Kontextinformationen enthalten. Weiterhin müssen die Datensätze, wie auch die Datenbank, nicht in gesonderter Form vorliegen. Es genügt vollkommen, wenn die Datensätze als logische Einheiten zugänglich sind, wenn also die jeweils einem Datensatz zugehörigen Daten unmittelbar abrufbar sind. Als Datenbank selbst mag dann auch beispielsweise die zuvor erläuterte industrielle Cloud selbst gelten. Natürlich können aber auch gesonderte Datensätze in einer lokalen Datenbank vorgehalten werden.

Die Menge von Datensätzen wird beispielsweise gebildet, indem für jedes Objekt einmalig oder wiederholt die Sensordaten nach den jeweiligen Messungen zusammen mit der ersten Kontextinformation, der zweiten Kontextinformation und der dritten Kontextinformation in einem neuen Datensatz gespeichert werden. Die Datensätze können anhand neuer Messungen der Sensoren fortlaufend aktualisiert werden, wodurch auch die im Folgenden näher beschriebenen Grafiken fortlaufend aktualisiert werden können. Dies kann auch in Echtzeit erfolgen.

Beispielsweise benennen die erste Kontextinformation, die zweite Kontextinformation und die dritte Kontextinformation jeweils
- einen Zeitpunkt der Messungen, oder
- einen Ort, an dem die Messungen erfolgt sind, insbesondere eine Fertigungsstation wie eine Roboterzelle, oder
- einen Typ oder eine Seriennummer des Objekts, beispielsweise ein Gehänge Nummer 81, oder
- einen Typ oder eine Seriennummer eines Sekundärobjekts, welches zum Zeitpunkt der Messungen mit dem Objekt in Beziehung stand und insbesondere mit diesem mechanisch verbunden war und/oder auf dieses eingewirkt hat, beispielsweise eine Karosserie vom Typ Limousine viertürig mit Schrägheck, oder
- einen Typ oder eine Seriennummer eines der Sensoren.

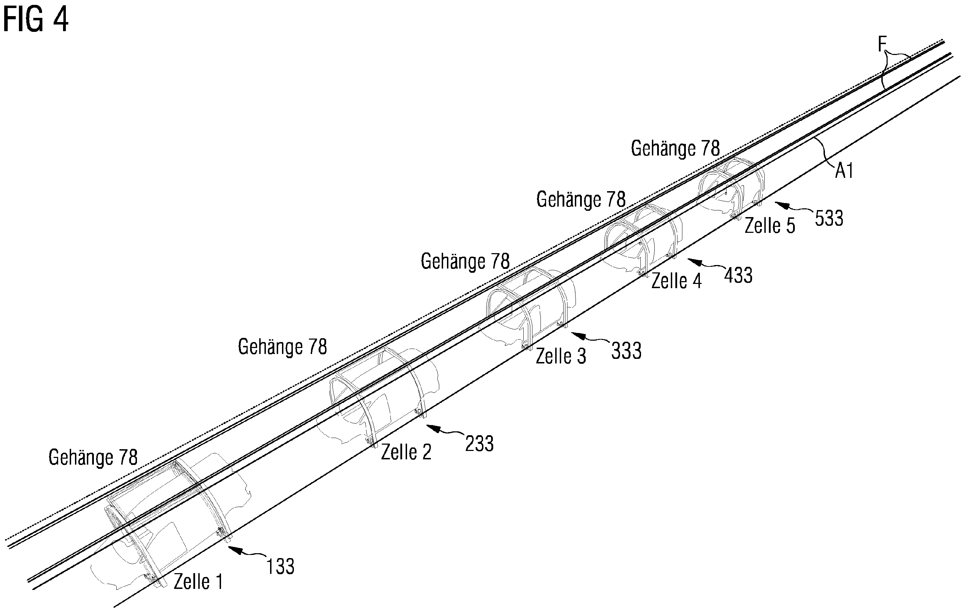

Figur 4 zeigt nun erste Grafiken 133, 233, 433, 533, welche neben der Fokusgrafik 333 auf einer ersten Achse A1 auf einer grafischen Benutzeroberfläche aufgereiht werden.

Beispielsweise hat ein Ingenieur im Rahmen einer Inspektion oder Zustandsüberwachung der Objekte, welche auch im laufenden Betrieb erfolgen kann, durch eine initiale Benutzerinteraktion, beispielsweise eine Tippgeste auf einem Touchdisplay oder ein Mausklick, ein Objekt in den Fokus genommen, welches in Figur 4 durch die Fokusgrafik 333 abgebildet wird. Es handelt sich hierbei um ein Gehänge Nr. 78, welches entlang einer Fertigungslinie in einer dritten Roboterzelle positioniert ist und eine Karosserie von einem Typ A trägt. Der entsprechende Fokusdatensatz enthält neben den Sensordaten, welche aus der dritten Roboterzelle bereitgestellt werden, beispielsweise folgende Kontextinformationen:
Objekt-Nummer = 78
Fertigungsstation = 3
Karosserie-Typ = A
Zeitpunkt = 2020-12-21-23-59-59

Aus diesen Kontextinformationen wählt der Ingenieur in einer ersten Benutzeraktion als erste Kontextinformation die Fertigungsstation aus, welche dadurch zu einer Variablen wird, welche für die weitere Untersuchung herangezogen wird. Für die in Figur 4 gezeigte Darstellung werden nun erste Datensätze aus der Datenbank abgerufen, deren erste Kontextinformation (Fertigungsstation) mit der ersten Kontextinformation des Fokusdatensatzes nicht übereinstimmt, während die anderen beiden Kontextinformationen (Objekt-Nummer und Karosserie-Typ) mit dem Fokusdatensatz übereinstimmen.

Für jeden der ersten Datensätze wird eine Ist-Pose des jeweiligen Objekts, hier stets des Gehänges Nr. 78 aus den jeweiligen Sensordaten (hier als Variablen der jeweiligen Roboterzelle) entnommen oder berechnet. Wie zuvor erläutert wird eine zugehörige skalierte Pose berechnet. Die ersten Grafiken 133, 233, 433, 533 zeigen daraufhin das Gehänge Nr. 78 auf einer ersten Achse A1 entlang Führungen F in den unterschiedlichen Roboterzellen, wobei die ersten Grafiken abwechselnd grafische Abbildungen des Gehänges Nr. 78 in der jeweiligen Soll-Pose und grafische Abbildungen des Gehänges Nr. 78 in der jeweiligen skalierten Pose zeigen, wie dies bereits zuvor für die Fokusgrafik 333 erläutert wurde. Das Gehänge Nr. 78 wackelt auf der graphischen Benutzeroberfläche unterschiedlich stark, am stärksten in der links vorne eingezeichneten ersten Grafik 133 für die erste Roboterzelle.

Der Ingenieur kann nun bereits unterscheiden, inwieweit signifikante Abweichungen auf das Gehänge Nr. 78 selbst oder die jeweilige Roboterzelle zurückzuführen sind.

Die ersten Grafiken 133, 233, 433, 533 können auch das Objekt über einen längeren Zeitraum, etwa Monate oder Jahre, im Vergleich darstellen, wodurch eine graduelle bzw. schleichende Abnutzung etwa von Rollen erkennbar und bewertbar wird.

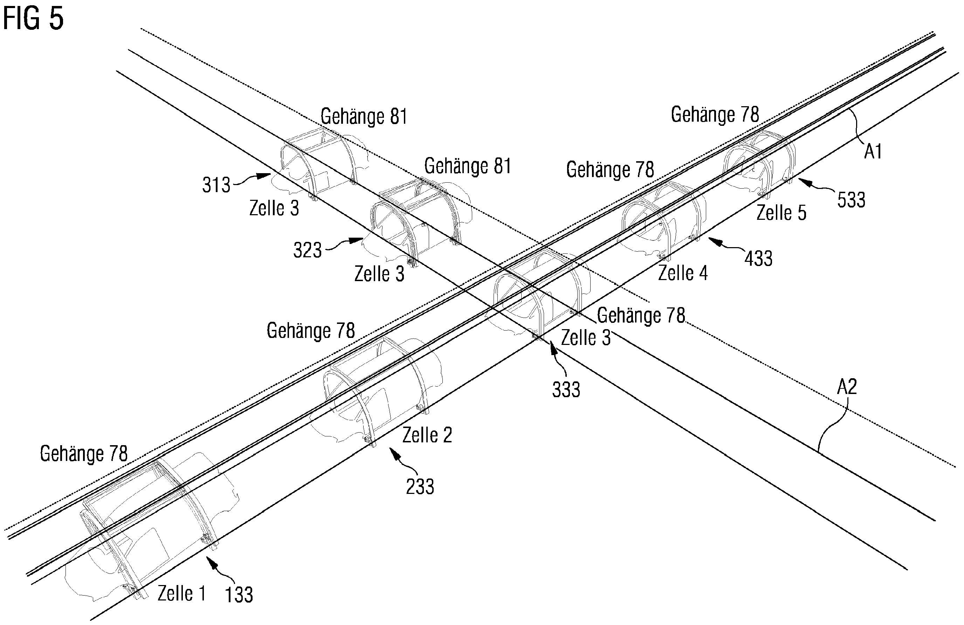

Figur 5 zeigt zweite Grafiken 313, 323, welche auf einer zweiten Achse A2 aufgereiht werden, welche die erste Achse A1 an der Position der Fokusgrafik 333 schneidet.

Hierzu hat der Ingenieur zunächst in einer zweiten Benutzeraktion als zweite Kontextinformation das Gehänge selbst ausgewählt, welches dadurch zu einer Variablen wird, welche für die weitere Untersuchung herangezogen wird. Für die in Figur 5 gezeigte Darstellung werden nun zweite Datensätze aus der Datenbank abgerufen, deren zweite Kontextinformation (Objekt-Nummer) mit der ersten Kontextinformation des Fokusdatensatzes nicht übereinstimmt, während die anderen beiden Kontextinformationen (Fertigungsstation und Karosserie-Typ) mit dem Fokusdatensatz übereinstimmen.

Für jeden der zweiten Datensätze wird eine Ist-Pose des jeweiligen Objekts, hier als Variablen der Gehänge Nr. 36 und 81, aus den jeweiligen Sensordaten der dritten Roboterzelle entnommen oder berechnet. Wie zuvor erläutert wird eine zugehörige skalierte Pose berechnet. Die zweiten Grafiken 313, 323 zeigen daraufhin die unterschiedlichen Objekte (Gehänge) auf einer zweiten Achse A2, wobei die zweiten Grafiken abwechselnd eine grafische Abbildung des jeweiligen Objekts in der jeweiligen Soll-Pose und eine grafische Abbildung des jeweiligen Objekts in der jeweiligen skalierten Pose zeigen, wie dies bereits zuvor für die Fokusgrafik 333 erläutert wurde.

Vorteilhafterweise werden die zweiten Grafiken 313, 323 gemeinsam mit der Fokusgrafik 333 visuell hervorgehoben oder normal dargestellt, während die ersten Grafiken 133, 233 ausgeblendet oder ausgegraut werden, damit sich der Ingenieur auf den Vergleich der zweiten Grafiken 313, 323 mit der Fokusgrafik 333 konzentrieren kann.

Der Ingenieur kann nun bereits unterscheiden, inwieweit signifikante Abweichungen nur das Gehänge Nr. 78 selbst oder auch andere Gehänge in der dritten Roboterzelle betreffen.

Selbstverständlich kann der Ingenieur jederzeit jede der gezeigten Grafiken anwählen und dadurch in den Fokus rücken, wodurch der entsprechende Datensatz als Fokusdatensatz gewählt wird.

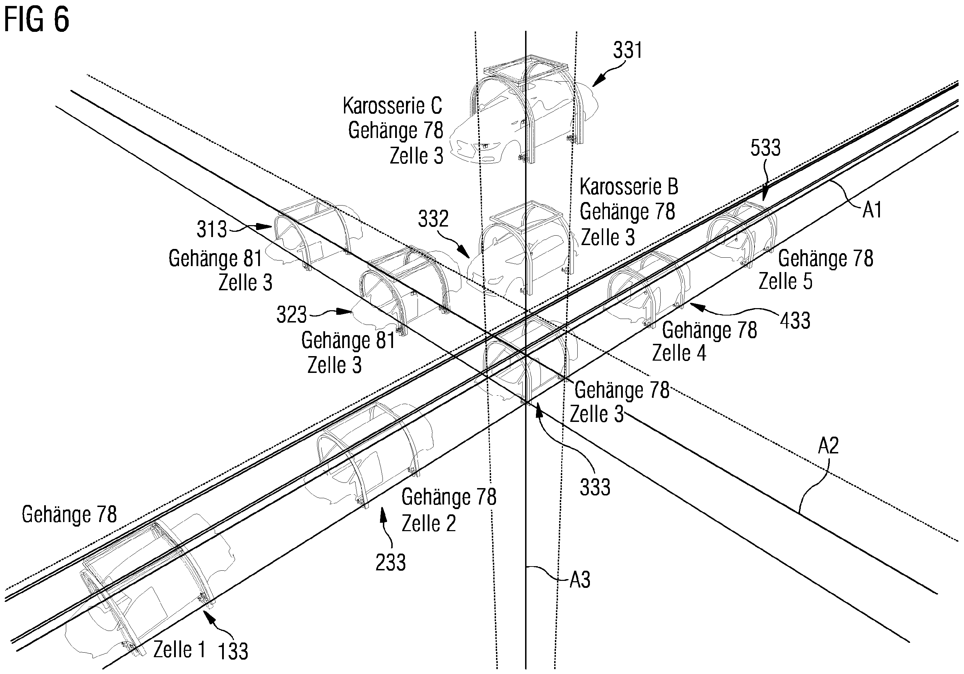

Figur 6 zeigt dritte Grafiken 331, 332, welche auf einer dritten Achse A3, welche die erste Achse A1 und die zweite Achse A2 an der Position der Fokusgrafik 333 schneidet, aufgereiht werden.

Hierzu hat der Ingenieur zunächst in einer dritten Benutzeraktion als dritte Kontextinformation den Typ des Sekundärobjekts, hier der Karosserie, ausgewählt, welche dadurch zu einer Variablen wird, welche für die weitere Untersuchung herangezogen wird. Für die in Figur 6 gezeigte Darstellung werden nun dritte Datensätze aus der Datenbank abgerufen, deren dritte Kontextinformation (Karosserie -Typ) mit der ersten Kontextinformation des Fokusdatensatzes nicht übereinstimmt, während die anderen beiden Kontextinformationen (Fertigungsstation und Objekt-Nummer) mit dem Fokusdatensatz übereinstimmen.

Für jeden der dritten Datensätze wird eine Ist-Pose des Gehänges Nr. 78 aus den jeweiligen Sensordaten der dritten Roboterzelle entnommen oder berechnet. Wie zuvor erläutert wird eine zugehörige skalierte Pose berechnet. Die dritten Grafiken 331, 332 zeigen daraufhin das Gehänge Nr. 78 mit unterschiedlichen Sekundärobjekten (der Karosserie Typ B und der Karosserie Typ C) auf einer dritten Achse A3, wobei die dritten Grafiken abwechselnd eine grafische Abbildung des Gehänges Nr. 78 in der jeweiligen Soll-Pose und eine grafische Abbildung des Gehänges Nr. 78 in der jeweiligen skalierten Pose zeigen, wie dies bereits zuvor für die Fokusgrafik 333 erläutert wurde.

Vorteilhafterweise werden die dritten Grafiken 331, 332 gemeinsam mit der Fokusgrafik 333 visuell hervorgehoben oder normal dargestellt, während die ersten Grafiken 133, 233, 433, 533 und die zweiten Grafiken 313, 323 ausgeblendet oder ausgegraut werden, damit sich der Ingenieur auf den Vergleich der dritten Grafiken 331, 332 mit der Fokusgrafik 333 konzentrieren kann.

Der Ingenieur kann nun unterscheiden, inwieweit signifikante Abweichungen am Gehänge Nr. 78 in der dritten Roboterzelle nur einen bestimmten Karosserie-Typ oder alle Karosserie-Typen gleichermaßen betreffen. Bei dem in Figur 6 gezeigten Fall weicht das Gehänge Nr. 78 mit dem Karosserie-Typ C in der oberen dritten Grafik 331 auffallend stark von der Soll-Pose ab.

Figur 6 zeigt somit ein bildliches Schema, in dessen Zentrum eine Halterung mit Werkstück steht, und zwar in einer bestimmten Situation, hier in einem bestimmten Fertigungsprozessschritt zu einem vom Ingenieur im Rahmen der Untersuchung gewählten Zeitpunkt. Dazu werden im Vergleich auf der zweiten Achse A2 andere Halterungen mit gleichen Arten von Werkstücken und auf der dritten Achse A3 die gleiche Halterung mit anderen Arten von Werkstücken gezeigt, beides jeweils im gleichen Prozessschritt, welcher in der dritten Roboterzelle erfolgt.

Der Ingenieur kann bei Störungen, beispielsweise Maßabweichungen, auf der grafischen Benutzeroberfläche sehen, ob sich diese Störungen nur bei einem bestimmten Prozessschritt, nur bei einer bestimmten Halterung, oder nur bei einem bestimmten Art von Werkstück einstellen; oder ob sie sich bei anderen Prozessschritten, Halterungen oder Werkstücken wiederholen.

Die Soll-Pose kann im Hinblick auf unterschiedliche Objekte, Fertigungsstationen und Sekundärobjekte jeweils identisch oder für das jeweilige Objekt, die jeweilige Fertigungsstation oder das jeweilige Sekundärobjekt spezifisch sein. Die Ist-Pose ist stets als Abweichung zur zugehörigen Soll-Pose definiert und darum diagnostisch aussagekräftig. Wie zuvor erläutert können sämtliche Grafiken in sämtlichen Ausführungsbeispielen auch andere Sensordaten darstellen, etwa Temperatur oder Vibration, wobei auch jeweils keine Abweichung von einem Referenzwert gezeigt werden muss.

Wenn mehr erste Datensätze, zweite Datensätze oder dritte Datensätze gefunden werden, als sich auf der grafischen Benutzeroberfläche übersichtlich darstellen lassen, wird nur eine Auswahl gezeigt. Über geeignete Bedienelemente kann der Ingenieur die jeweiligen Datensätze weiter filtern, falls dies notwendig ist.

Die Grafiken können zusätzlich Pfeile, Zahlen, Beschriftungen oder andere Symbole enthalten.

Die Fokusgrafik 333 wird bevorzugt in der Mitte der ersten Achse A1, der zweiten Achse A2 und der dritten Achse A3 angeordnet, wobei die Fokusgrafik 333, die ersten Grafiken 133, 233, 433, 533, die zweiten Grafiken 313, 323 und die dritten Grafiken 331, 332 auf der jeweiligen Achse bevorzugt äquidistant angeordnet werden.

Die erste Achse A1, die zweite Achse A2 und die dritte Achse A3 liegen bevorzugt orthogonal zueinander und werden durch eine Projektion auf die grafische Benutzeroberfläche abgebildet. Die Projektion ist bevorzugt eine Zentralprojektion, insbesondere eine Zwei-Fluchtpunkt-Perspektive, oder eine isometrische Parallelprojektion ist.

Die isometrische Parallelprojektion bietet den Vorteil, dass die keine Verzerrung beinhaltet. Daher können vorab generierte Rastergrafiken für die Grafiken verwendet werden.

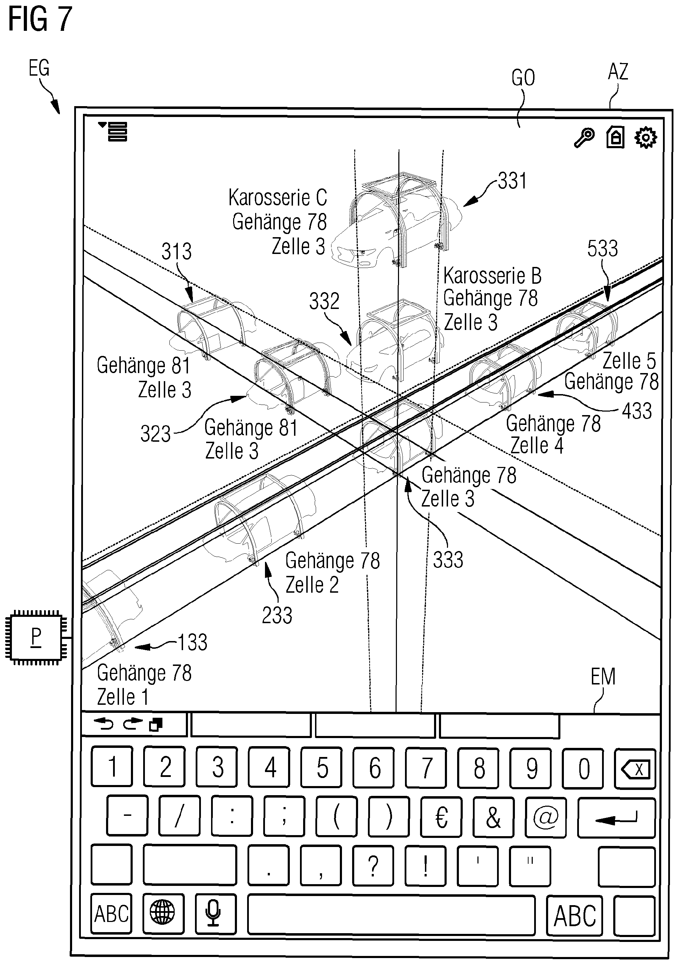

Figur 7 zeigt ein Endgerät EG mit einem Prozessor P, einem Eingabemittel EM und einer Anzeige AZ, welche zur Ausgabe einer grafischen Benutzeroberfläche GO eingerichtet ist.

Das Eingabegerät EM ist beispielsweise eine virtuelle Tastatur auf einem Tastschirm, eine mechanische Tastatur, eine Maus, ein Trackpad, oder eine Vorrichtung zur Spracheingabe oder Gestensteuerung.

Der Prozessor P ist beispielsweise ein Mikroprozessor oder Mikrocontroller, ein System-on-Chip oder ein programmierbarer Digitalbaustein, etwa ein "Field Programmable Gate Array" (FPGA) .

Das Endgerät EG ist beispielsweise ein Notebook, ein Smartphone, ein Tablet, eine AR-Brille, eine VR-Brille oder ein PC.

Die Anzeige AZ ist beispielsweise ein Bildschirm oder ein Projektor, welcher ein zweidimensionales Bild oder ein dreidimensionales Bild ausgibt. Das dreidimensionale Bild kann beispielsweise stereoskopisch ausgegeben werden.

Der Prozessor P kann im Endgerät EG oder in einem Server angeordnet sein. Er kann die zuvor erläuterten Verfahrensschritte allein, im Wechsel oder parallel mit anderen Prozessoren ausführen.

Beispielsweise kann der Prozessor P im Endgerät angeordnet sein und als Haupt- oder Grafikprozessor die zuvor erläuterten Grafiken selbst rendern. Der Prozessor P kann für das Rendern Code verarbeiten, welcher in einer Web3D-Beschreibungssprache geschrieben ist, um die Grafiken dreidimensional darzustellen, und in HTML-Code eingebettet ist, welcher von einem Server empfangen wird. Die Grafiken können als zweidimensionale Rastergrafiken gerendert werden, welche optional in den zugehörigen Datensätzen gespeichert werden.

Alternativ kann der Prozessor P in einem Server angeordnet sein und dort die zuvor erläuterten Grafiken rendern. Hierbei können die Grafiken auch in zweidimensionale Rastergrafiken umgewandelt werden, welche optional in den zugehörigen Datensätzen gespeichert werden. Weiterhin können die gerenderten Grafiken zur Darstellung an das Endgerät EG übertragen werden, beispielsweise mittels eines Remote-Desktops, oder mittels eines interaktiven Video-Streams. Hierbei kann insbesondere auch die gesamte graphische Benutzeroberfläche GO von dem Server an das Endgerät EG übermittelt werden. Der Server kann weiterhin über geeignete Schnittstellen für den Zugriff auf die Datenbank verfügen. Gleiches gilt für das Endgerät EG, wenn die Berechnungen im Endgerät erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur automatisierten Unterstützung einer Inspektion und/oder Zustandsüberwachung von Objekten,
bei dem
- ein Prozessor (P) auf eine Datenbank zugreift, welche eine Menge von Datensätzen enthält, in welcher ein Fokusdatensatz enthalten ist, wobei jeder Datensatz aus der Menge von Datensätzen für jeweils ein Objekt aus einer Menge von Objekten
- Sensordaten enthält, welche Messwerte von Messungen von Sensoren an dem Objekt und/oder daraus abgeleitete Daten enthalten, und
- eine erste Kontextinformation, eine zweite Kontextinformation und eine dritte Kontextinformation enthält, welche jeweils das Objekt selbst oder eine Situation des Objekts zum Zeitpunkt der Messungen an dem Objekt charakterisieren,
- der Prozessor (P) oder ein weiterer Prozessor erste Datensätze aus der Menge von Datensätzen auswählt,
- deren erste Kontextinformation mit der ersten Kontextinformation des Fokusdatensatzes nicht übereinstimmt, und
- deren zweite Kontextinformation mit der zweiten Kontextinformation des Fokusdatensatzes übereinstimmt,
- der Prozessor (P) oder ein weiterer Prozessor eine Fokusgrafik (333), welche die Sensordaten des Fokusdatensatzes darstellt, und erste Grafiken (133, 233, 433, 533), welche jeweils die Sensordaten jeweils eines der ersten Datensätze darstellen, auf einer ersten Achse (A1) auf einer grafischen Benutzeroberfläche (GO) aufreiht,
- der Prozessor (P) oder ein weiterer Prozessor zweite Datensätze aus der Menge von Datensätzen auswählt,
- deren erste Kontextinformation mit der ersten Kontextinformation des Fokusdatensatzes übereinstimmt, und
- deren zweite Kontextinformation mit der zweiten Kontextinformation des Fokusdatensatzes nicht übereinstimmt,
- der Prozessor (P) oder ein weiterer Prozessor zweite Grafiken (313, 323), welche jeweils die Sensordaten jeweils eines der zweiten Datensätze darstellen, auf einer zweiten Achse (A2) auf der grafischen Benutzeroberfläche (GO) aufreiht, welche die erste Achse (A1) an der Position der Fokusgrafik (333) schneidet.

2. Verfahren nach Anspruch 1,
- bei dem sich die Datenbank in einem mit dem Prozessor (P) verbundenen Speicher oder in einer Cloud befindet, und/oder
- bei dem der Prozessor (P), ein weiterer Prozessor oder mehrere Prozessoren für jedes Objekt einmalig oder wiederholt die Sensordaten nach den jeweiligen Messungen erhält und diese zusammen mit der ersten Kontextinformation, der zweiten Kontextinformation und der dritten Kontextinformation in dem jeweiligen Datensatz speichert, wodurch die Menge von Datensätzen in der Datenbank gebildet wird.

3. Verfahren nach einem der vorhergehenden Ansprüche,
- bei dem die Datensätze anhand neuer Messungen der Sensoren fortlaufend aktualisiert werden, und
- bei dem die Fokusgrafik (333), die ersten Grafiken und/oder die zweiten Grafiken fortlaufend aktualisiert werden, um die aktualisierten Sensordaten darzustellen,
- wobei die Aktualisierungen insbesondere in Echtzeit erfolgen.

4. Verfahren nach einem der vorhergehenden Ansprüche,
- bei dem die Objekte Bauelemente, Teile, Geräte, Maschinen, Betriebsmittel, Produktionsmittel, Teilsysteme, Systeme und/oder Funktionseinheiten sind, und/oder
- bei dem die erste Kontextinformation, die zweite Kontextinformation und die dritte Kontextinformation jeweils
- einen Zeitpunkt der Messungen, oder
- einen Ort, an dem die Messungen erfolgt sind, insbesondere eine Fertigungsstation oder
- einen Typ oder eine Seriennummer des Objekts, oder
- einen Typ oder eine Seriennummer eines Sekundärobjekts (SO), welches zum Zeitpunkt der Messungen mit dem Objekt in Beziehung stand und insbesondere mit diesem mechanisch verbunden war und/oder auf dieses eingewirkt hat, oder
- einen Typ oder eine Seriennummer eines der Sensoren angeben.

5. Verfahren nach einem der vorhergehenden Ansprüche,
bei dem
- die ersten Datensätze und die zweiten Datensätze so gewählt werden, dass deren dritte Kontextinformation mit der dritten Kontextinformation des Fokusdatensatzes übereinstimmt,
- der Prozessor (P) oder ein weiterer Prozessor dritte Datensätze aus der Menge von Datensätzen auswählt,
- deren erste Kontextinformation mit der ersten Kontextinformation des Fokusdatensatzes übereinstimmt,
- deren zweite Kontextinformation mit der zweiten Kontextinformation des Fokusdatensatzes übereinstimmt, und
- deren dritte Kontextinformation mit der dritten Kontextinformation des Fokusdatensatzes nicht übereinstimmt, und
- der Prozessor (P) oder ein weiterer Prozessor dritte Grafiken (331, 332), welche jeweils die Sensordaten jeweils eines der dritten Datensätze darstellen, auf einer dritten Achse (A3) auf der grafischen Benutzeroberfläche (GO) aufreiht, welche die erste Achse (A1) und die zweite Achse (A2) an der Position der Fokusgrafik (333) schneidet.

6. Verfahren nach Anspruch 5,
bei dem der Prozessor (P) oder ein weiterer Prozessor
- eine initiale Benutzerinteraktion auswertet, welche den Fokusdatensatz aus der Menge von Datensätzen auswählt, und/oder
- eine erste Benutzerinteraktion auswertet, welche die erste Kontextinformation aus einer Menge von Kontextinformationen, welche in dem Fokusdatensatz gespeichert sind, auswählt, und/oder
- eine zweite Benutzerinteraktion auswertet, welche die zweite Kontextinformation aus der Menge von Kontextinformationen auswählt, und/oder
- eine dritte Benutzerinteraktion auswertet, welche die dritte Kontextinformation aus der Menge von Kontextinformationen auswählt.

7. Verfahren nach Anspruch 5 oder 6,
- bei dem der Prozessor (P) oder ein weiterer Prozessor die Fokusgrafik (333), die ersten Grafiken, die zweiten Grafiken und/oder die dritten Grafiken
- selbst rendert und danach insbesondere in den jeweiligen Datensätzen speichert, oder
- aus den jeweiligen Datensätzen abruft, oder
- von einem Server abruft, welcher die Grafiken selbst rendert und/oder in einem Speicher vorhält.

8. Verfahren nach einem der Ansprüche 5 bis 7,
- bei dem die Fokusgrafik (333), die ersten Grafiken, die zweiten Grafiken und/oder die dritten Grafiken Pfeile, Zahlen und/oder andere Symbole enthalten.

9. Verfahren nach einem der Ansprüche 5 bis 8,
- bei dem die Fokusgrafik (333), die ersten Grafiken, die zweiten Grafiken und/oder die dritten Grafiken
- dreidimensional und insbesondere durch Code einer Web3D-Beschreibungssprache beschrieben sind, oder
- zweidimensionale Rastergrafiken sind, welche insbesondere animiert sind und/oder dreidimensional erscheinen.

10. Verfahren nach einem der Ansprüche 5 bis 9,
- bei dem die Fokusgrafik (333) in der Mitte der ersten Achse (A1), der zweiten Achse (A2) und der dritten Achse (A3) angeordnet wird, und/oder
- bei dem die Fokusgrafik (333), die ersten Grafiken, die zweiten Grafiken und/oder die dritten Grafiken auf der jeweiligen Achse äquidistant angeordnet werden.

11. Verfahren nach einem der Ansprüche 5 bis 10,
- bei dem die erste Achse (A1), die zweite Achse (A2) und die dritte Achse (A3) orthogonal zueinander liegen und durch eine Projektion auf die grafische Benutzeroberfläche (GO) abgebildet werden,
- wobei die Projektion eine Zentralprojektion, insbesondere eine Zwei-Fluchtpunkt-Perspektive, oder eine isometrische Parallelprojektion ist.

12. Verfahren nach einem der Ansprüche 5 bis 11,
- bei dem die Fokusgrafik (333), die ersten Grafiken, die zweiten Grafiken und/oder die dritten Grafiken jeweils
- eine Abweichung der Sensordaten des jeweiligen Datensatzes von einem Soll-Zustand visualisieren, wobei der Grad der Abweichung insbesondere durch eine Einfärbung visualisiert wird, und/oder
- animiert sind.

13. Verfahren nach einem der Ansprüche 5 bis 12,
- bei dem die Fokusgrafik (333), die ersten Grafiken, die zweiten Grafiken und/oder die dritten Grafiken das jeweilige Objekt abbilden, wobei die Abbildung des Objekts
- durch die Sensordaten beeinflusst und/oder
- durch die Darstellung der Sensordaten überlagert und/oder angereichert wird.

14. Verfahren nach einem der Ansprüche 5 bis 13,
- bei dem die Fokusgrafik (333), die ersten Grafiken, die zweiten Grafiken und/oder die dritten Grafiken
- ein Wärmebild des jeweiligen Objekts zeigen, welches Temperaturmessungen darstellt, oder
- ein Vibrationsmuster des jeweiligen Objekts zeigen, welches Vibrationsmessungen bildlich darstellt, oder
- eine Lageabweichung des jeweiligen Objekts zeigen, welche Messungen von Position und/oder Orientierung bildlich darstellt.

15. Verfahren nach einem der Ansprüche 5 bis 13,
bei dem
- der Prozessor (P) oder ein weiterer Prozessor die Fokusgrafik (333), die ersten Grafiken, die zweiten Grafiken und/oder die dritten Grafiken erstellt, indem er jeweils
- aus den Sensordaten in dem jeweiligen Datensatz eine Ist-Pose des jeweiligen Objekts entnimmt oder berechnet, welche eine Translation und/oder Rotation gegenüber einer Soll-Pose (1) des jeweiligen Objekts angibt,
- aus der Ist-Pose des jeweiligen Objekts eine skalierte Pose (2) des jeweiligen Objekts berechnet, indem der Prozessor (P) die Translation und/oder Rotation gegenüber der Soll-Pose des Objekts skaliert,
- wobei jede Grafik bewegt ist und abwechselnd eine grafische Abbildung des jeweiligen Objekts in der Soll-Pose (1) des jeweiligen Objekts und eine grafische Abbildung des jeweiligen Objekts in der skalierten Pose (2) des jeweiligen Objekts zeigt, und
- wobei die Skalierung derart gewählt ist, dass eine für die Inspektion und/oder Zustandsüberwachung diagnostisch relevante Abweichung der Ist-Pose des jeweiligen Objekts von der Soll-Pose (1) des jeweiligen Objekts auf der grafischen Benutzeroberfläche (GO) deutlich erkennbar ist.

16. Verfahren nach Anspruch 15,
- bei dem das jeweilige Objekt eine Halterung ist, welche insbesondere ein Werkstück hält, oder
- bei dem das jeweilige Objekt ein Werkstück ist, welches insbesondere durch eine Halterung gehalten wird, oder
- bei dem das Objekt aus einer Halterung und einem Werkstück besteht, wobei die Halterung das Werkstück hält.

17. Verfahren nach Anspruch 16,
- bei dem die Halterung ein Gehänge ist, und/oder bei dem das Werkstück eine Karosserie ist.

18. Verfahren nach einem der Ansprüche 15 bis 17,
- bei dem die Skalierung derart gewählt ist, dass eine Richtung der Translation und/oder Rotation deutlich erkennbar ist, indem die Translation insbesondere um einen Faktor zwischen 10 und 200 skaliert wird, und indem die Rotation insbesondere um einen Faktor zwischen 10 und 200 skaliert wird.

19. Verfahren nach einem der Ansprüche 15 bis 18,
- bei dem jede Grafik eine Animation zeigt, in welcher sich das jeweilige Objekt kontinuierlich zwischen der Soll-Pose (1) des jeweiligen Objekts und der skalierten Pose (2) des jeweiligen Objekts hin- und herbewegt, wobei die Bewegung von einer Pose in die andere zwischen 0,4 und 1,7 Sekunden, insbesondere zwischen 0,8 und 0,9 Sekunden dauert.

20. Verfahren nach Anspruch 19,
- bei dem die Animation das jeweilige Objekt während der Bewegung in die skalierte Pose (2) des jeweiligen Objekts in Abhängigkeit von dem Ausmaß der Translation und/oder Rotation zunehmend einfärbt.

21. Endgerät (EG) zur automatisierten Unterstützung einer Inspektion und/oder Zustandsüberwachung von Objekten,
- mit mindestens einem Prozessor (P), programmiert zur Ausführung des Verfahrens gemäß einem der Ansprüche 1 bis 20,
- mit einer Anzeige (AZ), eingerichtet zur Ausgabe der grafischen Benutzeroberfläche (GO), und
- mit einer Schnittstelle, eingerichtet für den Zugriff auf die Datenbank.

22. Server zur automatisierten Unterstützung einer Inspektion und/oder Zustandsüberwachung von Objekten,
- mit mindestens einem Prozessor (P), programmiert zur Ausführung des Verfahrens gemäß einem der Ansprüche 1 bis 20,
- mit einer oder mehreren Schnittstellen, eingerichtet für den Zugriff auf die Datenbank und zur Übermittlung der grafischen Benutzeroberfläche (GO) an ein Endgerät (EG), welches über eine Anzeige (AZ) verfügt.

23. Server nach Anspruch 22,
- bei dem der Prozessor (P) programmiert ist zur Übermittlung der grafischen Benutzeroberfläche (GO) an das Endgerät (EG)
- mittels eines Remote-Desktops, oder
- mittels eines interaktiven Video-Streams, oder
- mittels HTML-Code, in welchen insbesondere Code einer Web3D-Beschreibungssprache eingebettet ist, anhand dessen die Fokusgrafik (333), die ersten Grafiken, die zweiten Grafiken und/oder die dritten Grafiken auf dem Endgerät (EG) gerendert werden.

24. Computerlesbarer Datenträger,
- auf dem ein Computerprogramm gespeichert ist, welches das Verfahren nach einem der Ansprüche 1 bis 20 ausführt, wenn es in einem Prozessor abgearbeitet wird.

25. Computerprogramm,
- welches in einem Prozessor abgearbeitet wird und dabei das Verfahren nach einem der Ansprüche 1 bis 20 ausführt.
